Europäisches Patentamt

European Patent Office

Office européen des brevets

(11) Numéro de publication: **0 361 395**
**A1**

## (12) DEMANDE DE BREVET EUROPEEN

(21) Numéro de dépôt: **89117758.6**

(22) Date de dépôt: **26.09.89**

(51) Int. Cl.5: **H04J 3/06 , H04L 25/45**

(30) Priorité: **27.09.88 FR 8812606**

(43) Date de publication de la demande:
**04.04.90 Bulletin 90/14**

(84) Etats contractants désignés:
**DE ES FR GB IT NL SE**

(71) Demandeur: **ALCATEL TRANSMISSION PAR FAISCEAUX HERTZIENS A.T.F.H.**
**55, rue Greffulhe**
**F-92301 Levallois-Perret Cédex(FR)**

(72) Inventeur: **Bongeot-Minet, Christine**
**Résidence "Château des Perriers" Bâtiment A**
**escalier 4 F-93370 Montfermeil(FR)**
Inventeur: **Szczepanowski, Serge**
**25, rue de l'Orée du Bois**
**F-95000 Vaureal(FR)**

(74) Mandataire: **Weinmiller, Jürgen et al**
**Lennéstrasse 9 Postfach 24**
**D-8133 Feldafing(DE)**

(54) **Dispositif de traitement de signaux plesiochrones.**

(57) Dispositif de traitement de signaux plesiochrones ($S_1$) pour leur adaptation à un support de transmission, par exemple par faisceaux hertziens.

Il comporte un composant UART (1, 2) apte à transformer, à l'émission, le signal incident ($S_1$) en signal asynchrone ($S_2$), avec changement de fréquence de répétition (H), et à régénérer, à la réception, ce signal plésiochrone ($S_1$) et sa fréquence d'origine (h) à partir du signal asynchrone reçu ($S_2$).

Fig.1

Fig.2

EP 0 361 395 A1

## DISPOSITIF DE TRAITEMENT DE SIGNAUX PLESIOCHRONES

La présente invention se rapporte à un dispositif de traitement de signaux plésiochrones, c'est à dire quasi-synchrones.

Les dispositifs connus qui effectuent le traitement de signaux plésiochrones pour leur adaptation à un support de transmission quelconque, utilisent le principe dit de justification positive.

Selon ce procédé connu, le signal binaire incident est tout d'abord écrit dans une mémoire tampon de profondeur plus ou moins importante. La lecture de cette mémoire est ensuite réalisée par l'horloge souhaitée sur le support de transmission, la fréquence de cette hordevant être au moins légèrement supérieure à la plus grande fréquence incidente possible.

Pour éviter les erreurs de relectures, le doublement de l'information est autorisé à des instants particuliers imposés par une base de temps. Cette dernière génère également une structure de trame et insère un mot de synchronisation pour localiser ces instants particuliers dans le binaire émis.

La partie réception de ces dispositifs connus est équipée de moyens pour localiser les instants caractéristiques par la recherche du mot de synchronisation. La structure de trame ayant alors été régénérée, les instants de justification et d'autorisation de déjustification sont connus et une mémoire tampon est utilisée pour effectuer le retrait du bit doublé et le lissage de la fréquence sortante.

Ces dispositifs connus ont pour inconvénients de nécessiter un grand nombre de composants, et d'être par suite assez coûteux, de consommer beaucoup d'énergie électrique, et d'être peu optimisés pour des applications où le débit à transmettre est faible (inférieur à 70 Kilohertz) et où l'augmentation de débit est peu critique.

De plus, chaque partie du schéma est tributaire des fréquences incidentes ou de lecture, car la gigue générée par ce type de système, et appelée gigue d'attente, peut s'avérer importante. Enfin, s'il est nécessaire de transmettre une découpe supplémentaire par mot de "n" bits, la génération d'une structure de trame correcte peut s'avérer plus complexe.

L'invention vise à remédier à ces inconvénients. Elle se rapporte à cet effet à un dispositif de traitement de signaux plésiochrones pour leur adaptation à un support de transmission, par exemple par faisceaux hertziens, ce dispositif comportant au moins un composant spécifique de type UART (récepteur - transmetteur asynchrone universel), qui est apte à transformer, à l'émission, le signal plésiochrone incident en un signal asynchrone, avec changement de fréquence de répétition, ainsi qu'à régénérer, à la réception, ce signal plésiochrone et sa fréquence d'origine à partir du signal asynchrone reçu.

L'invention sera bien comprise, et ses avantages et autres caractéristiques ressortiront, au cours de la description suivante d'un exemple non limitatif de réalisation, en référence au dessin schématique annexé dans lequel :

- Figure 1 représente la partie émission de ce dispositif de traitement de signaux ; et

- Figure 2 représente la partie réception de ce même dispositif.

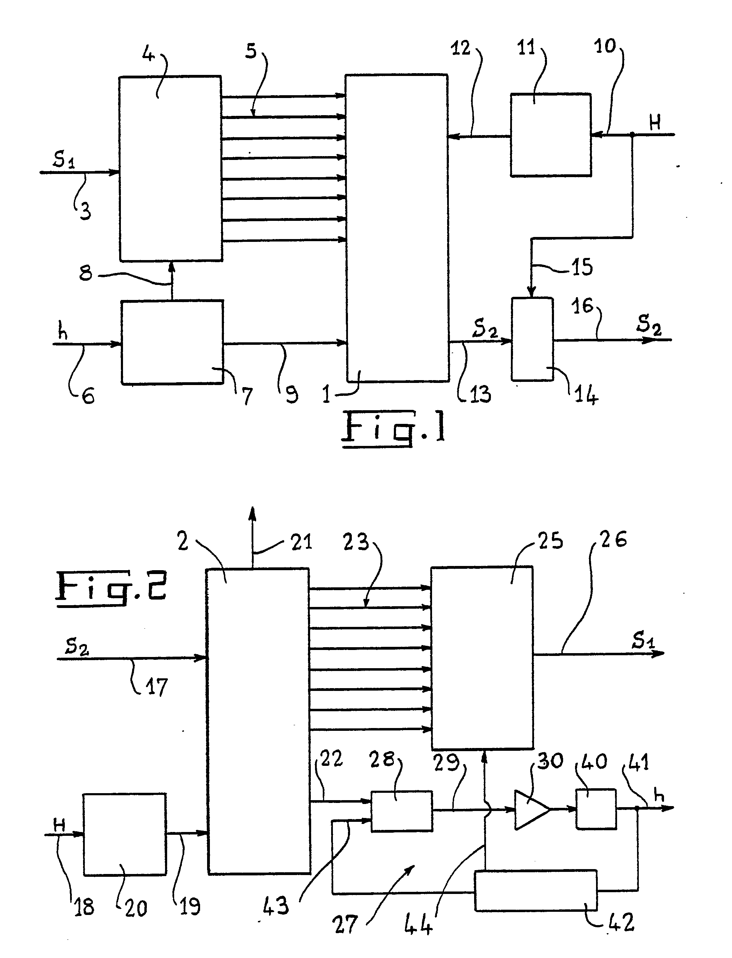

Le dispositif conforme à l'invention et schématisé aux figures 1 et 2 utilise, pour réaliser cette fonction de traitement de signaux binaires plésiochrones pour leur adaptation à un support de transmission, un composant du commerce employé habituellement dans les transmissions asynchrones d'information série, et dont l'appellation commune est "UART" (Universal Asynchronous Receiver Transmitter, c'est à dire : Récepteur - Transmetteur Asynchrone Universel). Ce composant comporte deux moitiés distinctes, dont une moitié 1, figure 1, dite d'émission, et une moitié 2, figure 2, dite de réception. Il est apte à générer une structure de trame très simplifiée, et il fournit des informations sur les signaux émis ou reçus qui sont utilisés ici de façon particulière.

En se reportant à la figure 1, le signal binaire plésiochrone $S_1$ à fréquence h, à transmettre par faisceaux hertziens, est appliqué sur le fil d'entrée 3 d'un dispositif 4 de démultiplexage qui transforme les huit bits chaque mot, émis en série sur le fil 3, en huit bits émis en parallèle, respectivement sur les huit fils de sortie 5 du démultiplexeur 4.

L'horloge h de ce signal binaire incident est appliquée par le fil 6 à un diviseur par huit, dont une première sortie 8 commande le démultiplexeur 4 précité, et dont une autre sortie 9 fournit au demi-UART d'émission 1 le signal de chargement du mot à transmettre, présent sur les fils 5 précités.

L'horloge H à fréquence donnée par le signal radioélectrique, par exemple 30 kilohertz, est appliquée en 10 à un multiplicateur par seize 11 (nécessaire au fonctionnement de l'UART) et la sortie 12 de ce multiplicateur est appliquée au demi-UART d'émission 1.

Le demi-UART transforme le signal reçu en parallèle sur les fils 5 en un signal asynchrone série de type RS 232, c'est à dire en un signal série de type asynchrone dont chaque mot comprend classiquement :

. un bit de start permettant la synchronisation ;

. des bits d'information : ici, huit bits ; . un ou plusieurs bits de parité ; . un ou plusieurs bits de stop.

Le signal asynchrone $S_2$ créé par le demi-UART 1 apparaît sur sa sortie, et il est appliqué à une bascule de mise en forme 14 qui reçoit également, par le fil d'entrée 15, le signal d'horloge H à fréquence radioélectrique. Ce signal mis en forme est extrait finalement en 16 et il est appliqué à l'émetteur radioélectrique (non représenté) avec une fréquence de répétition finalement égale à celle de l'horloge H, c'est à dire 30 kilohertz.

En se reportant maintenant à la figure 2, le récepteur radio-électrique (non représenté) fournit au demi-UART de réception 2 :
- un train incident constitué par le signal asynchrone $S_2$ reçu, en standard RS 232 et à fréquence de 30 kilobits/s, sur le fil 17 ;
- en 19 un signal de commande de ce demi-UART, constitué par l'horloge H à 30 kilohertz fournie en 18 par le faisceau hertzien, et classiquement multipliée par 16 par le multiplicateur 20.

En réponse à ces signaux d'entrée, le demi-UART 2 fournit :
- sur sa sortie 21 des informations sur la qualité de la liaison si la présence d'un ou plusieurs bits de parité a été choisie pour la transmission ;
- sur sa sortie 22 une impulsion de reconnaissance de mot en standard RS 232 : il s'agit d'une impulsion liée à l'obtention d'un mot correct incident et ayant la configuration souhaitée précitée du signal asynchrone en RS 232 ;
- sur ses huit sorties parallèles 23 les huits bits du mot reçu et reconnu.

Les huit trains en parallèle sont appliqués sur ces huit fils 23 à un multiplexeur 25, qui fournit sur sa sortie 26 le signal binaire plésiochrone $S_1$ à fréquence de répétition égale à celle de l'horloge h précitée. Pour ce faire, les impulsions de reconnaissance de mot RS 232, apparaissant sur le fil 22, sont appliquées à une boucle à verrouillage de phase 27.

La boucle 27 comporte un comparateur de phases 28, qui reçoit sur sa première entrée 22 le signal de reconnaissance de mot précité, et dont la sortie 29 est appliquée, à travers un circuit 30 d'amplification et de filtrage, à un oscillateur commandé en tension, ou "VCO", 40, qui fournit lui-même un signal périodique à fréquence de l'horloge h sur sa sortie 41. Ce signal de sortie est appliqué, par l'intermédiaire d'un diviseur par huit 42, sur la seconde entrée 43 du comparateur de phases 28. Le signal de sortie du diviseur par huit 42 est également appliqué en 44 au multiplexeur 25.

L'information apparaissant en 22, qui est à la fréquence des paquets d'information reçus, et donc à la fréquence de l'horloge h divisée par huit, est finalement ainsi utilisée pour resynchroniser une boucle à verrouillage 27 dont l'oscillateur 40 est à la fréquence h. Cette horloge h, ainsi régénérée, est utilisée pour remultiplexer les signaux et reconstituer ainsi le signal incident $S_1$ avec son débit nominal à fréquence h.

Le dispositif qui vient d'être décrit permet donc la transmission d'informations binaires avec, côté émission, changement de fréquence puis, côté réception, restitution du rythme et des informations binaires incidentes, en utilisant des composants employés dans les transmissions asynchrones péri-informatiques.

Ce dispositif, utilisant un nombre de composants réduit, est peu sensible à la fréquence incidente $F_i$ et à la fréquence de lecture $F_e$, pour peu qu'elles répondent à l'inégalité :

$$F_i < F_e \times \frac{n}{m}$$

où n est le nombre de bits d'information à transmettre, égal à huit dans l'exemple ci-dessus, et m la longueur du mot émis en standard RS 232.

Cette limitation en fréquence incidente est dépendante de la technologie, et donc des spécifications techniques du composant UART utilisé.

De plus, si le signal incident nécessite la transmission d'une information de synchronisation par mot, cette information est naturellement transmise par le train régénéré.

Comme il va de soi, l'invention n'est pas limitée à l'exemple de réalisation qui vient d'être décrit. La fréquence de fonctionnement du dispositif n'étant limitée que par la technologie du composant UART utilisé, il peut s'appliquer à tous les signaux de type plésiochrone, en les considérant dans le cadre de données asynchrones.

**Revendications**

1 - Dispositif de traitement de signaux plésiochrones ($S_1$) pour leur adaptation à un support de transmission, caractérisé en ce qu'il comporte au moins un composant spécifique de type UART (1, 2) apte à transformer, à l'émission, le signal incident ($S_1$) en un signal asynchrone ($S_2$), avec changement de fréquence de répétition (H), et à régénérer, à la réception, ce signal plésiochrone ($S_1$) et sa fréquence d'origine (h) à partir du signal asynchrone ($S_2$) reçu.

2 - Dispositif de traitement selon la revendication 1, caractérisé en ce que ce composant de type UART (1, 2) est un composant pour standard asynchrone de type RS 232.

3 - Dispositif de traitement selon la revendication 1 ou la revendication 2, caractérisé en ce qu'il comporte :
- côté émission : une première moitié d'UART (1) qui reçoit le signal plésiochrone d'entrée ($S_1$) démultiplexé sous commande de son horloge (h), cette moitié d'UART (1) étant commandée à partir de la fréquence (H) du support de transmission, et qui transforme ce signal reçu (5) en signal asynchrone ($S_2$) émis à cette fréquence (H) ; et

- côté réception : une deuxième moitié d'UART (2) qui reçoit en entrée le signal asynchrone ($S_2$), dont la fréquence (H) lui sert de fréquence de commande (H x 16), et qui fournit, en parallèle à sa sortie (23) ce signal asynchrone vers un multiplexeur (25) qui est lui-même commandé à partir de l'horloge (h) du signal plésiochrone ($S_1$) régénérée par une boucle à verrouillage de phase (27) qui :

. comporte un oscillateur (40) à la fréquence de cette horloge (h),

. reçoit de cette seconde moitié d'UART (2) des impulsions (22) de reconnaissance de mot en standard asynchrone,

. fournit sur sa sortie (41) cette horloge régénérée (h), de sorte que ce multiplexeur (25) fournit sur sa sortie (26) le signal plésiochrone (5), provenant du signal d'entrée ($S_2$, 17), ce signal plésiochrone de sortie étant à sa fréquence d'origine (h).

4 - Dispositif de traitement selon la revendication 3, caractérisé en ce que le multiplexeur (25) est commandé par l'intermédiaire d'un diviseur (42) qui fait partie de la boucle à verrouillage de phase (27).

5 - Dispositif de traitement selon la revendication 3 ou la revendication 4, caractérisé en ce que la seconde moitié d'UART (2) comporte en outre une sortie (21) sur laquelle il fournit des informations sur la qualité de la liaison.

Fig.1

Fig.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | ELECTRONIC ENGINEERING, vol. 59, no. 724, avril 1987, pages 51-59, Woolwich, Londres, GB; G. CONNOR et al.: "TAXI chipset replaces multi-wire buses with a single, serial link" * Page 51, colonne de gauche, ligne 27 - colonne 2, ligne 3; page 52, colonne 2, ligne 7 - page 53, colonne de droite, ligne 18; page 54, colonne de droite, lignes 17-25 * | 1,3-5 | H 04 J    3/06 |
| A | IDEM<br>--- | 2 | |
| Y | FR-A-2 450 008   (PORTEJOIE et al.)<br>* Page 2, ligne 10 - page 5, ligne 21 *<br>--- | 1,3-5 | |
| A | JOURNEES INTERNATIONALES D'ETUDES SUR LA TRANSMISSION DES DONNEES, A.I.M. CONFERENCE, 17-18 juin 1974, bulletin scientifique no. 3, pages 187-190, Liège, BE; J. WEISS: "Data interface equipment for transmission of data signals at 9.6 KBIT/S or 48 KBIT/S on a telephony primary multiplex signal at 2,048 MBIT/S"<br>* Page 188, colonne de droite, paragraphe 5.1 - page 189, paragraphe 5.2 *<br>--- | 1-4 | |
| A | NTZ ARCHIV, vol. 4, avril 1979, pages 87-91, Berlin, DE; H. STEPHANBLOME: "Signalübernahmeverfahren asynchroner Nachrichtennetze für Breitband-Digitalsignale"<br>* Pages 88-89, paragraphe 2.2.; en entier *<br>----- | 1-4 | |

DOMAINES TECHNIQUES RECHERCHES (Int. Cl.5)

H 04 J
H 04 L

Le présent rapport a été établi pour toutes les revendications

| Lieu de la recherche | Date d'achèvement de la recherche | Examinateur |
|---|---|---|
| LA HAYE | 04-12-1989 | VAN DEN BERG,J.G.J. |